# EUROPÄISCHE PATENTANMELDUNG

(11) **EP 4 438 289 A1**
(43) Veröffentlichungstag der Anmeldung: **02.10.2024**
(21) Anmeldenummer: 24164780.9
(22) Anmeldetag: 20.03.2024
(51) Int. Cl.: B32B 3/12, B32B 5/02, B32B 5/18, B32B 5/24, B32B 7/12

(54) **FALTTECHNOLOGIE FÜR SANDWICHPLATTEN UND EINE ENTSPRECHENDE SANDWICHPLATTE**

(30) Priorität: 27.03.2023 DE 102023107649
(71) Anmelder: Elbe Flugzeugwerke GmbH, 01109 Dresden (DE)
(72) Erfinder: Nitsche, Steffen, Dresden (DE); Reissenweber, Uwe, Dresden (DE); Köllner, Markus, Dresden (DE); Symank, Holger, Dresden (DE)
(74) Vertreter: LKGLOBAL Lorenz & Kopf Patentanwalt Attorney at Law PartG mbB

(57) **Zusammenfassung**

Eine Sandwichplatte (100) und ein Verfahren zum Herstellen derselben sind beschrieben. Die Sandwichplatte (100) weist eine erste Decklage (110), eine zweite Decklage (120) und eine Kernschicht (130) auf. Die Kernschicht (130) ist zwischen beiden Decklagen angeordnet und mit beiden Decklange verbunden. Eine Fuge (140) ist in der Sandwichplatte (100) angeordnet, um ein Umformen der Sandwichplatte (100) zu ermöglichen. Die Fuge (140) erstreckt sich von einer ersten Kante (105) zu einer zweiten Kante (106) der Sandwichplatte (100). Die Fuge (140) erstreckt sich in einer Tiefenrichtung (148), welche sich senkrecht zu der ersten Decklage (110) in Richtung der zweiten Decklage (120) erstreckt, durch die erste Decklage (110) und die Kernschicht (130), so dass die Sandwichplatte (100) entlang der Fuge (140) aus einem Ausgangszustand, in welchem die Sandwichplatte eben ist, in einen gebogenen Zustand so umgeformt werden kann, dass sich entlang einer Längsrichtung (141) der Fuge (140) eine Biegekante bildet.

## Beschreibung

### Technisches Gebiet

Die vorliegende Beschreibung bezieht sich im Allgemeinen auf Leichtbautechnologie, und insbesondere auf den Aufbau von Sandwichplatten und ein Verfahren zum Herstellen von Sandwichplatten. Weiter insbesondere bezieht sich die Beschreibung auf Sandwichplatten mit einem gebogenen Verlauf sowie ein Verfahren, um entsprechende gebogene Sandwichplatten herzustellen.

### Technischer Hintergrund

Sandwichplatten werden bevorzugt im Leichtbau verwendet, weil sich Sandwichplatten bei einem vergleichsweise niedrigen Gewicht durch eine hohe mechanische Festigkeit und Widerstandsfähigkeit gegen äußere Belastungen auszeichnen. Sandwichplatten weisen zwei Decklagen und eine dazwischen angeordnete Kernschicht auf. Bedingt durch die Bauweise werden Sandwichplatten üblicherweise als flache bzw. ebene Elemente gefertigt. Oftmals werden Sandwichplatten auf ein vorgegebenes Maß oder eine vorgegebene Form gefertigt bzw. zurechtgeschnitten, um dann mit diesem Maß bzw. dieser Form in dem vorgesehenen Verwendungsumfeld montiert zu werden.

Bauartbedingt ist es eine Herausforderung, eine Sandwichplatte umzuformen, beispielsweise entlang einer Biegekante zu biegen. Ein solcher Umformungsvorgang kann zu einer strukturellen Schwächung der Sandwichplatte führen. Daher sind Umformungen von Sandwichplatten an gewisse Voraussetzungen geknüpft. Beispielsweise gibt es Einschränkungen hinsichtlich des Verlaufs der Biegekante relativ zu der Kernschicht.

Wenn auch Umformungsverfahren fürs Sandwichplatten existieren, gibt es hier Raum für Verbesserungen.

### Beschreibung

Es kann daher als Aufgabe der Erfindung angesehen werden, die Umformung einer Sandwichplatte mit einer relativ zu den Komponenten der Sandwichplatte beliebig verlaufenden Biegekante unter Beibehaltung einer hohen mechanischen Festigkeit der umgeformten Sandwichplatte zu ermöglichen.

Diese Aufgabe wird durch den Gegenstand der unabhängigen Ansprüche gelöst. Weitere Ausführungsformen ergeben sich aus den abhängigen Ansprüchen sowie aus der folgenden Beschreibung.

Gemäß einem ersten Aspekt weist eine Sandwichplatte eine erste Decklage, eine zweite Decklage und eine Kernschicht auf. Die Kernschicht ist zwischen der ersten Decklage und der zweiten Decklage angeordnet und ist mit der ersten Decklage und der zweiten Decklage verbunden. Eine Fuge ist in der Sandwichplatte angeordnet, um ein Umformen der Sandwichplatte zu ermöglichen. Die Fuge erstreckt sich von einer ersten Kante zu einer zweiten Kante der Sandwichplatte. Die Fuge erstreckt sich in einer Tiefenrichtung, welche sich senkrecht zu der ersten Decklage in Richtung der zweiten Decklage erstreckt, durch die erste Decklage und die Kernschicht, so dass die Sandwichplatte entlang der Fuge aus einem Ausgangszustand, in welchem die Sandwichplatte eben ist, in einen gebogenen Zustand so umgeformt werden kann, dass sich entlang einer Längsrichtung der Fuge eine Biegekante bildet.

Eine Sandwichplatte besteht allgemein aus zwei Decklagen und einem zwischen den beiden Decklagen angeordneten Kern bzw. einer Kernschicht.

Jede Decklage kann dabei aus mehreren Schichten bestehen. Die Decklagen werden an gegenüberliegenden Flächen der Kernschicht mit der Kernschicht verbunden, beispielsweise verklebt. Jede Decklage enthält eine oder mehrere Schichten. Die Decklagen sind aus stabilen Materialen mit im Vergleich zu der Kernschicht höherer Dichte gebildet. Für die Decklagen können Materialien wie beispielsweise Holz, Kunststoffe oder verschiedene Laminate verwendet werden. Beispielsweise sind die Decklagen aus getränktem Fasergeflecht (in verwebter oder gleichlaufender Struktur oder einer Kombination hiervon) gefertigt. Jede Schicht einer Decklage kann beispielsweise eine Glasfaserschicht oder Kohlefaserschicht oder ein metallisches Gelege enthalten. Die Fasern oder das metallische Gelege können in eine duroplastische Matrix eingebracht sein und somit eine Schicht der Decklage bilden. Beispielsweise ist das Fasergeflecht in Phenolharz getränkt.

Die Kernschicht besteht aus einem Material mit einer im Vergleich zu den Decklagen deutlich niedrigeren Dichte. Die Dichte der Kernschicht beruht vorliegend auf deren Masse sowie deren Volumen in dem in der Sandwichplatte verbauten Zustand. Um diese vergleichsweise niedrige Dichte zu erreichen, enthält die Kernschicht typischerweise Hohlräume. Beispielsweise enthält die Kernschicht einen Schaumkern oder einen Wabenkern.

Schaumkerne bestehen beispielsweise aus PVC-Schaumstoff (Polyvinylchlorid-Schaumstoff), PET-Schaumstoff (Polyethylenterephthalat-Schaumstoff) oder jedem anderen geeigneten Schaumstoff. PET-Schaum weist eine hohe mechanische Festigkeit auf und ist deshalb gut geeignet, um Drucklasten aufzunehmen. Zudem weist PET-Schaum eine hohe Schubfestigkeit und Schubbruchdehnung auf und ist leicht.

Wabenkerne weisen mehrere Waben auf und bestehen beispielsweise aus Kunststoffen, Pappen oder anderen geeigneten Materialen mit den benötigten Eigenschaften. Ein Wabenkern enthält eine Wabenstruktur, die aus verschiedenen Kunststoffen, Pappen oder anderen geeigneten Materialien aufgebaut ist. Der Wabenkern ist so geformt, dass er eine maximale Stabilität bei gleichzeitig geringem Gewicht hat.

Die Stabilität der Kernschicht kann lokal verstärkt werden, indem die Hohlräume in der Kernschicht an vorgegebenen Stellen mit einer Kernfüllmasse gefüllt werden. Die Kernfüllmasse wird üblicherweise in die Hohlräume eingebracht, bevor die Decklagen an gegenüberliegenden Flächen der Kernschicht befestigt werden. Als Kernfüllmasse können beispielsweise Blähglas, Blähton oder andere geeignete Füllstoffe verwendet werden.

Es können für die Kernschicht allerdings auch andere Leichtbaustoffe, wie beispielsweise Kork, verwendet werden.

Die stabilen Decklagen verteilen Drucklasten senkrecht zu der Flächennormale der Sandwichplatte gleichmäßig auf die leichte Kernschicht, wodurch die Kernschicht in der Lage ist, die Drucklasten aufzunehmen. Außerdem werden Schublasten beim Biegen der Sandwichplatten von dem leichten Material der Kernschicht gut aufgenommen. Die Decklagen hingegen widerstehen Zug- und Drucklasten in der Plattenebene.

Dieser Aufbau führt zu ausgezeichneter Stabilität der Sandwichplatten bei gleichzeitig geringem Gewicht.

Die Fuge wird beispielsweise in die Sandwichplatte eingebracht, indem Material abgetragen wird. Beispielsweise wird die Fuge gefräst, indem Teile der ersten Decklage und der Kernschicht abgetragen werden. Bevorzugt wird die Kernschicht im Bereich der Fuge vollständig abgetragen, so dass im Bereich der Fuge lediglich die zweite Decklage verbleibt. In die Fuge kann nun Klebstoff eingebracht werden, bevor sie Sandwichplatte entlang der Fuge umgeformt bzw. gebogen wird, und zwar so, dass die erste Decklage dort, wo das Material der Fuge abgetragen wurde, die Fuge verschließt oder nahezu verschließt. Die Fuge kann als Ausnehmung oder Nut bezeichnet werden und erstreckt sich von einer Außenkante der Sandwichplatte zu einer gegenüberliegenden Außenkante der Sandwichplatte. Die Fuge verläuft also über die gesamte Sandwichplatte, damit die gesamte Sandwichplatte eine Biegekante erhält, um die eine Biegung oder Umformung erfolgen kann.

Dieser Ansatz erlaubt es, eine Falttechnologie für Sandwichplatten bzw. gebogene oder gefaltete Sandwichplatten bereitzustellen. Indem eine Fuge mit der hier beschriebenen Geometrie in eine Sandwichplatte eingebracht wird, kann eine in einem Ausgangszustand ebene oder flache Sandwichplatte in einen gebogenen Zustand versetzt werden, wobei die Sandwichplatte sich auch in dem gebogenen Zustand durch eine hohe Festigkeit und Formstabilität auszeichnet.

Wenn die Sandwichplatte aus dem Ausgangszustand in den gebogenen Zustand versetzt wird, werden einander gegenüberliegende und an die Fuge angrenzende Kanten der ersten Decklage aufeinander zu bewegt, um die Fuge an der ersten Decklage zu schließen. Die erste Decklage bildet also einen inneren Verlauf der Biegung, wohingegen die zweite Decklage einen äußeren Verlauf der Biegung bildet.

Gemäß einer Ausführungsform ist die Kernschicht im Bereich der Fuge vollständig abgetragen.

Das bedeutet, dass im Bereich der Fuge, also über die gesamte Länge und Breite der Fuge, sowohl die erste Decklage als auch die Kernschicht vollständig abgetragen werden und die Fuge an der Unterseite lediglich von der zweiten Decklage begrenzt wird.

Gemäß einer weiteren Ausführungsform ist in dem gebogenen Zustand der Sandwichplatte ein Klebstoff in der Fuge enthalten. Der Klebstoff füllt die Fuge in dem gebogenen Zustand bevorzugt vollständig aus.

Der Klebstoff wird beispielsweise in die Fuge eingebracht, wenn die Sandwichplatte sich in dem Ausgangszustand befindet und die Fuge freigelegt wurde. Bereits in diesem Zustand kann so viel Klebstoff in die Fuge eingebracht werden, dass der Klebstoff die Fuge auch in dem Ausgangszustand vollständig ausfüllt. Sodann wird die Sandwichplatte aus dem Ausgangszustand in den gebogenen Zustand versetzt, wodurch sich das Volumen der Fuge reduziert. Hierbei wird Klebstoff aus der Fuge herausgedrückt. Allerdings wird auf diese Weise auch sichergestellt, dass der Klebstoff die Fuge in dem gebogenen Zustand der Sandwichplatte auch vollständig ausfüllt, wodurch eine hohe Güte und Festigkeit der Klebeverbindung erzielt werden kann. Überschüssiger Klebstoff wird an der ersten Decklage aus der Fuge austreten und kann entfernt werden. In Abhängigkeit davon, welcher Klebstoff hierfür verwendet wird, wird der ausgetretene Klebstoff vor oder nach dem Aushärten des Klebstoffs entfernt.

Gemäß einer weiteren Ausführungsform weist die Kernschicht eine Mehrzahl von Hohlräumen auf, wobei die Hohlräume in einem an die Fuge angrenzenden Bereich der Kernschicht mit einer Kernfüllmasse gefüllt sind.

Die Hohlräume der Kernschicht werden beispielsweise während der Herstellung der Sandwichplatte in dem für die Fuge vorgesehenen Bereich mit Kernfüllmasse gefüllt. Die Kernfüllmasse verleiht der Sandwichplatte lokal eine erhöhte Festigkeit. Der mit Kernfüllmasse gefüllte Bereich der Kernschicht ist größer als die später in die Sandwichplatte eingebrachte Fuge. Somit ist die Kernschicht in dem an die Fuge angrenzenden Bereich durch die Kernfüllmasse stabilisiert und gefestigt. Der mit Kernfüllmasse gefüllte Bereich der Kernschicht kann auf jeder Seite der Fuge in etwa der Breite der Fuge entsprechen oder auch kleiner sein. Die Kernschicht ist im Bereich der Fuge bevorzugt entlang der gesamten Länge der Fuge mit Kernfüllmasse gefüllt. Die Kernfüllmasse trägt dazu bei, dass die Kernschicht im Bereich der an die Fuge angrenzenden Flächen eine hohe mechanische Widerstandsfähigkeit hat. Im Übrigen kann die Kernfüllmasse dazu beitragen, dass die Festigkeit der Klebung im Bereich der Fuge zusätzlich erhöht ist.

Gemäß einer weiteren Ausführungsform ist die Kernschicht ein Wabenkern.

Der hier beschriebene Aufbau einer Sandwichplatte ist besonders vorteilhaft mit einem Wabenkern als Kernschicht zu erreichen, weil ein Wabenkern definierte und gleichmäßig verteilte Hohlräume hat, welche mit einer Kernfüllmasse im Bereich der Fuge gefüllt werden können, wodurch die Sandwichplatte auch in dem gebogenen Zustand im Bereich der Biegekante bzw. im Bereich der Fuge eine hohe Festigkeit hat.

Gemäß einer weiteren Ausführungsform weist die Fuge mindestens eine sich in Querrichtung der Fuge erstreckende Querfuge auf, wobei ein Verstärkungselement in der Querfuge angeordnet ist.

Die Querfuge hat in Querrichtung eine größere Erstreckung als es die Fuge dort hat, wo keine Querfuge angeordnet ist. Die Sandwichplatte kann auch mehr als eine Querfuge aufweisen, wobei die Querfugen in Längsrichtung der Fuge voneinander beabstandet angeordnet sind.

Wenn die Fuge mit Klebstoff gefüllt wird, verteilt sich der Klebstoff in der gesamten Fuge inklusive der Querfuge. Der Klebstoff umgibt auch das Verstärkungselement. Das bedeutet, dass das Verstärkungselement vollständig in Klebstoff eingebettet ist. In diesem Zustand umgibt der Klebstoff das Verstärkungselement. Wenn der Klebstoff aushärtet, verleiht das Verstärkungselement der gefalteten Sandwichbauplatte Festigkeit, weil das Verstärkungselement in dem Klebstoff eingebettet ist.

Beim Herstellungsverfahren kann zunächst die Fuge mitsamt Querfuge mit Klebstoff gefüllt werden. Anschließend wird die Sandwichbauplatte gefaltet bzw. in einen gewünschten Zustand gebracht. Dann wird das Verstärkungselement in die mit Klebstoff gefüllte Querfuge gelegt und in den Klebstoff eingebracht, bis der Klebstoff das Verstärkungselement vollständig umgibt. In diesem Zustand härtet der Klebstoff aus. Allgemein ausgedrückt ist in dem gebogenen oder gefalteten Zustand der Sandwichbauplatte Klebstoff in der Fuge mitsamt Querfuge enthalten und das Verstärkungselement ist in diesem Zustand vollständig in Klebstoff eingebettet.

Im Bereich der Querfuge wird, nachdem die Sandwichplatte in den gebogenen Zustand versetzt worden ist, Klebstoff so abgetragen, dass die Oberfläche des Klebstoffs im Wesentlichen dem Oberflächenverlauf der ersten Decklage entspricht.

Die Querfuge ist genauso wie die verbleibende Fuge so ausgestaltet, dass im Bereich der Querfuge die erste Decklage und die Kernschicht vollständig abgetragen sind.

Gemäß einer weiteren Ausführungsform ist das Verstärkungselement ein mehrschichtiges Material.

Das Verstärkungselement kann beispielsweise aus einem mehrschichtigen Materialblock gefräst werden. Hierbei kann das Verstärkungselement so aus dem Materialblock gefräst werden, dass das Verstärkungselement einen Winkel bildet, welcher dem Biegewinkel der Sandwichplatte in dem gebogenen Zustand entspricht. In anderen Worten wird das Verstärkungselement also nicht durch eine Umformung in einen gebogenen Zustand gebracht, sondern seine abgewinkelte Form ist das Ergebnis des zugehörigen Herstellungsverfahrens.

Das Verstärkungselement trägt dazu bei, dass die Form der Sandwichplatte in dem gebogenen Zustand gegen hohe mechanische Lasten aufrechterhalten werden kann.

Gemäß einer weiteren Ausführungsform ist die Fuge durch eine erste Fugenwand und eine der ersten Fugenwand gegenüberliegende zweite Fugenwand begrenzt.

Gemäß einer weiteren Ausführungsform weist die Fuge einen ersten Abschnitt auf, in welchem die erste Fugenwand in dem Ausgangszustand der Sandwichplatte parallel zu der zweiten Fugenwand verläuft.

In dem ersten Abschnitt verlaufen sowohl die erste Fugenwand als auch die zweite Fugenwand parallel zueinander. Insbesondere stehen sowohl die erste Fugenwand als auch die zweite Fugenwand senkrecht auf der zweiten Decklage.

Der erste Abschnitt erstreckt sich in Tiefenrichtung der Fuge. Die erste Fugenwand und die zweite Fugenwand können über die gesamte Tiefe der Fuge parallel zueinander verlaufen, d.h., dass der erste Abschnitt sich über die gesamte Tiefe der Fuge erstreckt. Das bedeutet, dass die Fuge in dem nicht gebogenen Zustand (also dem Ausgangszustand) der Sandwichplatte eine rechteckige Querschnittsform hat, weil die Fuge von der ebenen zweiten Decklage und den senkrecht dazu verlaufenden und ebenen Fugenwänden begrenzt wird.

Gemäß einer weiteren Ausführungsform weist die Fuge einen zweiten Abschnitt auf, in welchem die erste Fugenwand schräg zu der zweiten Fugenwand verläuft, so dass die Fuge in dem zweiten Abschnitt in dem Ausgangszustand der Sandwichplatte eine konische Querschnittsform hat.

Der zweite Abschnitt kann sich an den ersten Abschnitt anschließen, so dass die Fuge angrenzend an die zweite Decklage zunächst einen Abschnitt mit senkrecht zu der zweiten Decklage verlaufenden Fugenwänden aufweist und sich der zweite Abschnitt mit der konischen Querschnittsform an den ersten Abschnitt anschließt. Die Fugenbreite der Fuge in dem zweiten Abschnitt mit der konischen Querschnittsform nimmt in Richtung der ersten Decklage zu.

Wenn die Sandwichplatte aus dem Ausgangszustand in den gebogenen Zustand versetzt wird, so nähern sich die Fugenwände des zweiten Abschnitts einander an. Die Fugenwände des zweiten Abschnitts verlaufen insbesondere in einem solchen Winkel, dass sie in dem gebogenen Zustand der Sandwichplatte einander gegenüberliegen und parallel zueinander verlaufen. In dem gebogenen Zustand der Sandwichplatte können die Fugenwände des zweiten Abschnitts einen kleinen Abstand zueinander haben, beispielsweise in etwa 1 mm.

Gemäß einem weiteren Aspekt ist ein Verfahren zum Herstellen einer gebogenen Sandwichplatte angegeben. Das Verfahren weist die folgenden Schritte auf: Herstellen einer Sandwichplatte mit einer ersten Decklage, einer zweiten Decklage und einer Kernschicht, wobei die Kernschicht zwischen der ersten Decklage und der zweiten Decklage angeordnet ist; Befüllen von Hohlräumen der Kernschicht mit einer Kernfüllmasse; Anfertigen einer Fuge von einer ersten Kante der Sandwichplatte zu einer gegenüberliegenden zweiten Kante der Sandwichplatte in einem Bereich der Sandwichplatte, in welchem die Hohlräume der Kernschicht mit Kernfüllmasse befüllt sind, wobei beim Anfertigen der Fuge über eine Breite und Länge der Fuge die erste Decklage und die Kernschicht abgetragen werden; in einem Ausgangszustand der Sandwichplatte, Befüllen der Fuge mit einem Klebstoff; Umformen der Sandwichplatte aus dem Ausgangszustand in einen gebogenen Zustand; und Aushärten des Klebstoffs in der Fuge.

Mit diesem Verfahren wird eine hierin beschriebene Sandwichplatte hergestellt. Bereits im Zusammenhang mit der Sandwichplatte wurden Schritte des Herstellungsverfahrens beschrieben und im Detail dargelegt. Diese Schritte und Details werden an dieser Stelle nicht wiederholt. Vielmehr wird auf die Beschreibung der Sandwichplatte verwiesen.

Der Ausgangszustand der Sandwichplatte bezieht sich auf den Ebenen und nicht geformten bzw. nicht gebogenen Zustand der Sandwichplatte. In diesem Ausgangszustand wird die Fuge mit Klebstoff befüllt und dann die Sandwichplatte aus dem Ausgangszustand in den gebogenen Zustand gebracht. Hierbei erfährt die zweite Decklage eine Biegung. Die Sandwichplatte kann zunächst in dem gebogenen Zustand durch das Aufbringen von äußeren Kräften gehalten werden, bis der Klebstoff in der Fuge aushärtet. Sobald der Klebstoff in der Fuge ausgehärtet ist, können die Haltekräfte entfernt werden, weil die Sandwichplatte nun von sich aus in dem gebogenen Zustand verbleibt.

Für das Anfertigen der Fuge kann beispielsweise ein Fräsverfahren mit einer entsprechenden Vorrichtung oder ein anderes Material abtragendes Verfahren zur Anwendung kommen.

Gemäß einer Ausführungsform werden beim Anfertigen der Fuge die erste Decklage und die Kernschicht über die gesamte Breite und die gesamte Länge der Fuge vollständig abgetragen.

Gemäß einer weiteren Ausführungsform umfasst das Anfertigen der Fuge das Anfertigen einer Querfuge und das Einbringen eines Verstärkungselements in die Querfuge.

Gemäß einer weiteren Ausführungsform umfasst das Anfertigen der Fuge das Anfertigen eines ersten Abschnitts der Fuge, wobei der erste Abschnitt in dem Ausgangszustand der Sandwichplatte zueinander parallel verlaufende gegenüberliegende Fugenwände hat.

Gemäß einer weiteren Ausführungsform umfasst das Anfertigen der Fuge das Anfertigen eines zweiten Abschnitts der Fuge, wobei der zweite Abschnitt in dem Ausgangszustand der Sandwichplatte zueinander schräg verlaufende gegenüberliegende Fugenwände hat, so dass der zweite Abschnitt in dem Ausgangszustand eine konische Querschnittsform hat, welche sich von der ersten Decklage in Richtung der zweiten Decklage verjüngt.

### Kurze Beschreibung der Zeichnungen

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine Profilansicht einer Sandwichplatte.
- Fig. 2: eine Draufsicht und eine Seitenansicht einer Kernschicht.
- Fig. 3: eine schematische Darstellung einer Sandwichplatte mit Fuge.
- Fig. 4: eine schematische Darstellung einer Sandwichplatte mit Fuge und Querfugen.
- Fig. 5: eine schematische Schnittdarstellung einer Sandwichplatte mit Fuge in einem Ausgangszustand.
- Fig. 6: eine schematische Schnittdarstellung einer Sandwichplatte mit Fuge gemäß Fig. 5 in einem gebogenen Zustand.
- Fig. 7: eine schematische Schnittdarstellung einer Sandwichplatte mit Fuge in einem Ausgangszustand.
- Fig. 8: eine schematische Schnittdarstellung einer Sandwichplatte mit Fuge gemäß Fig. 7 in einem gebogenen Zustand.
- Fig. 9: eine schematische Schnittdarstellung einer Sandwichplatte in dem Bereich einer Querfuge in einem gebogenen Zustand.
- Fig. 10: eine schematische Darstellung der Schritte eines Verfahrens zum Herstellen einer Sandwichplatte.

### Detaillierte Beschreibung

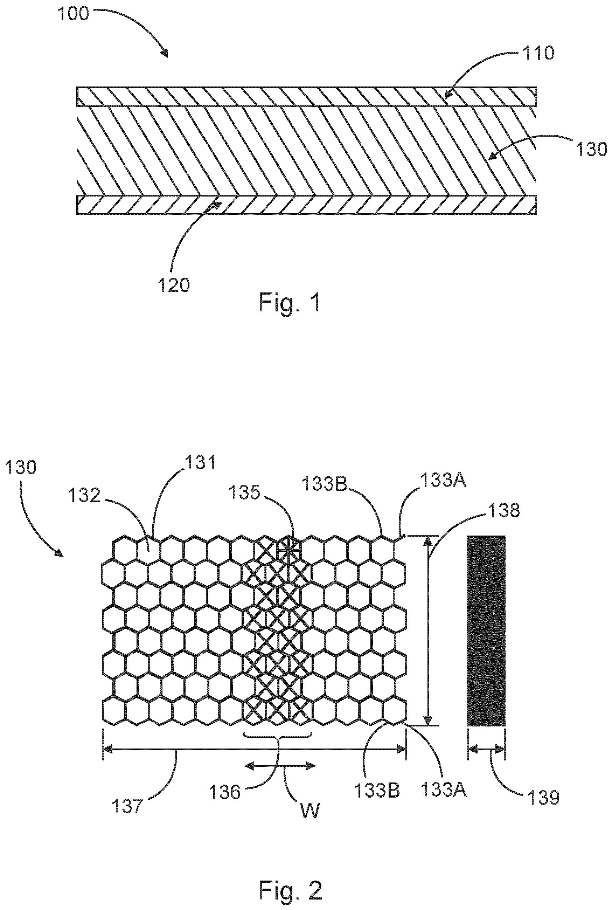

Fig. 1 zeigt in einer Profilansicht bzw. seitlichen Schnittansicht den grundsätzlichen Aufbau einer Sandwichplatte 100. Die Sandwichplatte 100 weist eine erste Decklage 110 und eine zweite Decklage 120 auf. Zwischen der ersten Decklage 110 und der zweiten Decklage 120 ist eine Kernschicht 130 angeordnet. Die Kernschicht 130 ist als Schaumkern oder Wabenkern ausgestaltet und enthält mehrere von dem Material der Kernschicht 130 mindestens teilweise umschlossene Hohlräume 132 (siehe Fig. 2). Die erste Decklage 110 und die zweite Decklage 120 sind aus einem Laminat gefertigt, beispielsweise in Phenolharz getränktem Fasergeflecht. Die Decklagen können aber auch aus allen anderen geeigneten Materialien bestehen. Beispielsweise sind die Decklagen 110, 120 mit der Kernschicht 130 verklebt, um die Sandwichplatte 100 zu bilden.

Fig. 2 zeigt beispielhaft den Aufbau eines Wabenkerns 130. Der Wabenkern 130 besteht aus einer Mehrzahl von Waben 131, wobei jede Wabe 131 einen Hohlraum 132 definiert. Der Hohlraum 132 ist von Material des Wabenkerns 130 mindestens teilweise umschlossen.

Der Wabenkern 130 ist in einer Draufsicht (links) und einer Seitenansicht (rechts) gezeigt. Entsprechend wird die Dimension des Wabenkerns 130 durch seine Breite/Weite 137, Länge 138 und Höhe 139 definiert.

Ein Wabenkern 130 besteht aus mehreren Streifen 133A, 133B. Benachbarte Streifen sind punktuell oder abschnittsweise miteinander verbunden, beispielsweise verklebt. Die Streifen 133A, 133B erstrecken sich in Richtung der Länge 138 des Wabenkerns 130.

Sobald die punktuelle oder abschnittsweise Verbindung zwischen benachbarten Streifen in einem Fertigungsvorgang die geforderte Festigkeit hat, wird der Wabenkern expandiert, indem der Wabenkern 130 quer zu der Erstreckungsrichtung der Streifen 133A, 133B expandiert wird. In anderen Worten wird der Wabenkern 130 in Richtung der Breite 137 expandiert, weshalb die Breitenrichtung auch als Expansionsrichtung W bezeichnet wird.

Wie bereits weiter oben beschrieben, können die Hohlräume 132 des Wabenkerns 130 mit einer Kernfüllmasse 135 gefüllt werden, um den Wabenkern 130 und somit die Sandwichplatte 100 lokal zu verstärken.

In dem Beispiel der Fig. 2 ist ein Bereich 136 des Wabenkerns 130 mit Kernfüllmasse 135 gefüllt, der sich von der oberen Kante des Wabenkerns bis zu der unteren Kante des Wabenkerns erstreckt. In diesem Bereich kann eine Fuge eingebracht werden. Die Fuge hat eine geringere Breite als der mit Kernfüllmasse 135 gefüllte Bereich 136 des Wabenkerns 130.

Die hier beschriebene Technik erlaubt es, dass eine Fuge in einen Wabenkern in eine beliebige Richtung eingebracht und die Sandwichplatte entsprechend entlang dieser Fuge gebogen wird. So kann sich die Fuge beispielsweise in Expansionsrichtung W des Wabenkerns oder quer zu der Expansionsrichtung, also entlang der Länge 138 des Wabenkerns, erstrecken. Es ist auch denkbar, dass sich eine Fuge unter einem von 0° oder 90° abweichenden Winkel sowohl zu der Längsrichtung 138 als auch zu der Expansionsrichtung W (Breite 137) erstreckt.

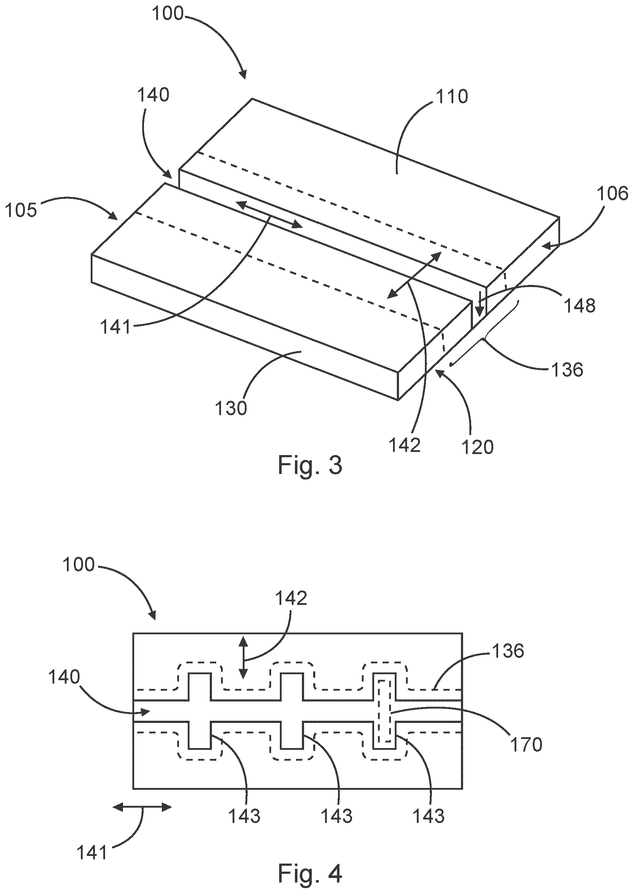

Fig. 3 zeigt eine schematische Darstellung einer Sandwichplatte 100 mit einer ersten Decklage 110, einer zweiten Decklage 120 und einer zwischen den Decklagen 110, 120 angeordneten Kernschicht 130. Eine Fuge 140 erstreckt sich geradlinig von einer ersten Kante 105 zu einer zweiten Kante 106 der Sandwichplatte 100 über die gesamte Ausdehnung der Sandwichplatte 100. Die Fuge 140 ist in dem Bereich 136 der mit Kernmasse gefüllten Hohlräume der Kernschicht 130 angeordnet.

Die Fuge 140 erstreckt sich in einer Längsrichtung 141 zwischen der ersten Kante 105 und der zweiten Kante 106 der Sandwichplatte 100. Die Querrichtung 142 der Fuge 140 verläuft quer zu der Längsrichtung 141 und die Fuge 140 erstreckt sich in Tiefenrichtung 148 durch die erste Decklage 110 und die Kernschicht 130 bis zu der zweiten Decklage 120. Im Bereich der Fuge 140 ist sowohl die erste Decklage 110 als auch die Kernschicht 130 bevorzugt vollständig abgetragen.

Fig. 4 zeigt eine Draufsicht auf eine Sandwichplatte 100 mit einem ähnlichen Aufbau, wie er schon in Fig. 3 gezeigt ist. Im Unterschied zu Fig. 3 weist die Fuge 140 in dem Beispiel der Fig. 4 drei Querfugen 143 auf. Die Querfugen 143 erstrecken sich in Querrichtung 142 der Fuge 140 quer zu der Längsrichtung 141. Die Querfugen 143 sind in Längsrichtung 141 voneinander beabstandet. Der Bereich 136, in dem die mit Kernfüllmasse gefüllte Hohlräume der Kernschicht sind, kann eine entsprechende Form haben, um die Fuge 140 mitsamt der Querfugen 143 zu enthalten. In anderen Worten ist der Bereich 136 entlang der Querrichtung 142 breiter als die Fuge 140 mitsamt den Querfugen 143 und beide Seitenwände der Fuge liegen innerhalb des Bereichs 136.

In einer Querfuge 143 ist ein Verstärkungselement 170 gezeigt. Ein solches Verstärkungselement ist bevorzugt in jeder Querfuge 143 angeordnet, auch wenn das in Fig. 4 lediglich für eine Querfuge 143 so gezeigt ist.

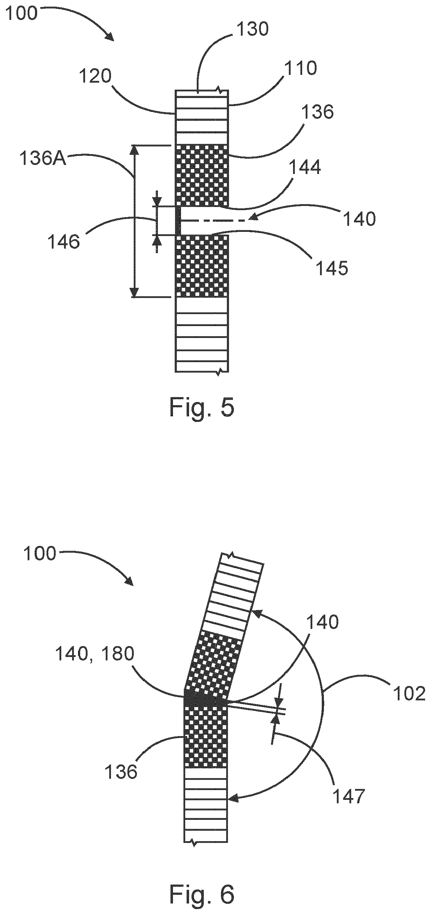

Fig. 5 zeigt eine Querschnittdarstellung eine Sandwichplatte 100. Die Sandwichplatte 100 hat den weiter oben beschriebenen Aufbau mit einer ersten Decklage 110, einer zweiten Decklage 120 und einer dazwischen angeordneten Kernschicht 130. Die Fuge 140 erstreckt sich durch die erste Decklage 110 und die Kernschicht 130 bis zu der zweiten Decklage 120. Die Fuge 140 wird begrenzt durch die erste Fugenwand 144 und die gegenüberliegende zweite Fugenwand 145. Die beiden Fugenwände 144, 145 können auch als Seitenwände der Fuge bezeichnet werden.

In dem Bereich 136 sind die Hohlräume der Kernschicht 130 mit Kernfüllmasse gefüllt. Der Bereich 136 erstreckt sich über eine Breite 136A. Innerhalb des Bereichs 136 befindet sich die Fuge 140 mit einer Breite 146, so dass beide Fugenwände 144, 145 innerhalb des Bereichs 136 liegen und die äußeren Grenzen des Bereichs 136 von beiden Fugenwänden 144, 145 beabstandet sind. Die Fuge 140 ist also beidseitig von mit Kernfüllmasse gefüllten Hohlräumen der Kernschicht umgeben.

Fig. 5 zeigt die Sandwichplatte 100 in dem Ausgangszustand. Es ist zu erkennen, dass die Fugenwände 144, 145 geradlinig und zueinander parallel verlaufen sowie bevorzugt senkrecht auf der zweiten Decklage 120 stehen.

Fig. 6 zeigt die Sandwichplatte 100 aus Fig. 5 in einem gebogenen Zustand. Die Sandwichplatte 100 ist entlang der Fuge 140, welche als Biegekante fungiert, in einem Biegungswinkel 102 gebogen, so dass die durch die Fuge 140 beabstandeten Abschnitte der ersten Decklage zueinander geführt werden, wodurch die Fuge eine andere Gestalt annimmt. Bevor die Sandwichplatte aus dem Ausgangszustand in den gebogenen Zustand gebracht wird, wird eine Klebemasse 180 in die Fuge eingebracht. Die zweite Decklage wird bei der Biegung verformt. Aufgrund der der zweiten Decklage innewohnenden Elastizität wird diese Biegung ermöglicht, ohne dass die zweite Decklage beschädigt wird. Die Öffnung in der ersten Decklage in dem Bereich der Fuge wird auf eine verbleibende Öffnung 147 verkleinert. Beim Biegen tritt Klebemasse 180 aus der Fuge 140 aus und befindet sich an der ersten Decklage. Nach dem Biegen wird die überschüssige Klebemasse 180 von der ersten Decklage entfernt.

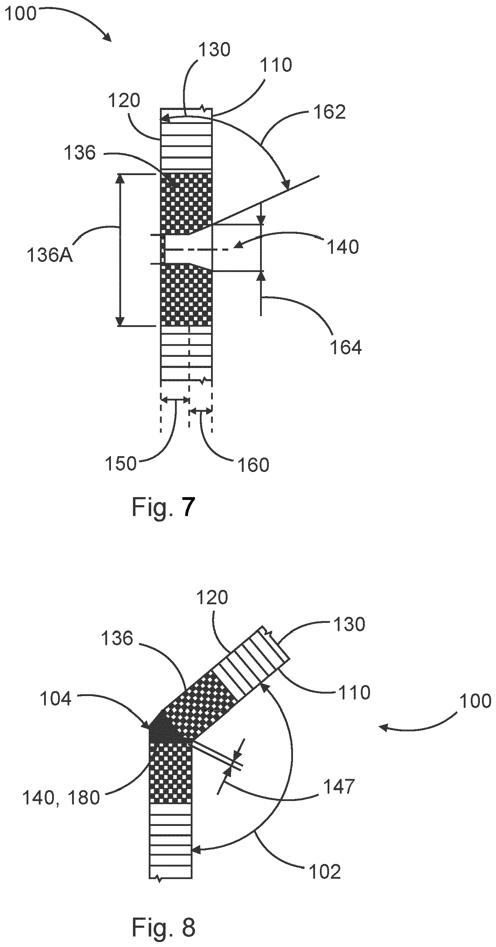

Ähnlich wie in den Fig. 5 und 6 zeigen die Fig. 7 und 8 eine Sandwichplatte 100 zunächst in einem Ausgangszustand (Fig. 7) sowie in einem gebogenen Zustand (Fig. 8). Im Unterschied zu den Fig. 5 und 6 wird in den Fig. 7 und 8 eine Fuge 140 mit einer anderen Geometrie gezeigt. Die Fuge 140 hat einen geradlinigen Abschnitt 150, in welchem die Seitenwände der Fuge senkrecht zu der zweiten Decklage 120 verlaufen. Der geradlinige Abschnitt 150 grenzt an die zweite Decklage 120 an. Weiterhin hat die Fuge 140 einen im Querschnitt konischen Abschnitt 160. Der konische Abschnitt 160 schließt sich an den geradlinigen Abschnitt 150 an. Die Seitenwände der Fuge verlaufen in dem konischen Abschnitt 160 unter einem Öffnungswinkel 162 zu der ersten Decklage 110 und der zweiten Decklage 120.

Der konische Abschnitt 160 hat an der ersten Decklage 110 seine maximale Breite 164. In Richtung der zweiten Decklage verjüngt sich der konische Abschnitt 160 in seinem Querschnitt, so dass die Seitenwände des konischen Abschnitts 160 in die Seitenwände des geradlinigen Abschnitt 150 übergehen. Die beiden Abschnitte 150, 160 der Fuge 140 können sich jeweils über die Hälfte der Höhe der Kernschicht 130 erstrecken. Andere Verhältnisse sind denkbar, so kann sich beispielsweise der geradlinige Abschnitt 150 über weniger oder mehr als die Hälfte und der konische Abschnitt 160 über die verbleibende Höhe der Kernschicht 130 erstrecken. Dieser Aufbau der Fuge 140 hat den Vorteil, dass der Biegeradius der Biegung stärker ausgeprägt sein kann bei gleichzeitig reduziertem Volumen der Fuge in dem gebogenen Zustand. Somit muss weniger Klebstoff 180 in die Fuge eingebracht bzw. weniger Material der Kernschicht abgetragen werden.

Dieser Zusammenhang erschließt sich aus der Darstellung in Fig. 8. Der Biegungswinkel 102 bzw. der Biegeradius 104 an der zweiten Decklage 120 ist stärker ausgeprägt als in Fig. 5, was sich daraus ergibt, dass die Breite 164 der Fuge an der ersten Decklage 110 größer ist. In dem gebogenen Zustand der Fig. 8 verlaufen die Seitenwände des konischen Abschnitts 160 im Wesentlichen parallel zueinander und sind geringfügig voneinander beabstandet, wie die verbleibende Öffnung 147 zeigt.

Mit zunehmendem Biegeradius 104 muss die Breite 146 der Fuge 140 an der ersten Decklage 110 zunehmen. Allerdings ist es nicht nötig, dass die Fuge 140 über die gesamte Tiefe diese Breite hat.

Der konische Abschnitt 160 ist üblicherweise lediglich in den Längsabschnitten der Fuge 140 erforderlich, welche außerhalb von Querfugen liegen.

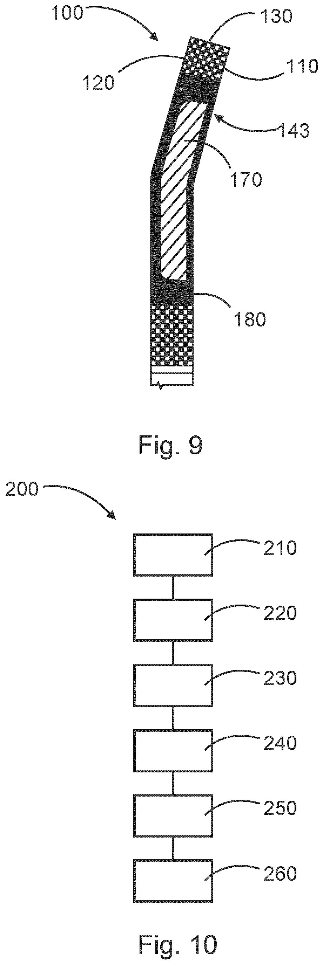

Fig. 9 zeigt eine schematische Querschnittsdarstellung einer Sandwichplatte 100 in dem Bereich einer Querfuge 143. In diesem Bereich der Querfuge 143 ist ein Verstärkungselement 170 eingebracht. Das Verstärkungselement 170 ist in der Querfuge 143 von Klebstoff 180 umgeben. Bevorzugt verläuft eine Schicht Klebstoff zwischen dem Verstärkungselement 170 und der zweiten Decklage 120 sowie den Abschnitten der Kernschicht 130, welche die Querfuge in Querrichtung begrenzen. Weiterhin bedeckt der Klebstoff 180 das Verstärkungselement auch an der Oberfläche, so dass das Verstärkungselement 170 vollständig in Klebstoff eingebettet ist.

Das Verstärkungselement 170 ist so geformt, dass sein Biegewinkel dem angestrebten Biegewinkel der Sandwichplatte 110 entspricht. Das Verstärkungselement 170 dient als Verstärkung der Sandwichplatte in dem gebogenen Bereich.

Fig. 10 zeigt ein Verfahren 200 zum Herstellen einer hierin beschriebenen Sandwichplatte und die zu dem Verfahren gehörenden Schritte.

In Schritt 210 wird eine Sandwichplatte 100 mit einer ersten Decklage 110, einer zweiten Decklage 120 und einer Kernschicht 130 hergestellt, wobei die Kernschicht 130 zwischen der ersten Decklage 110 und der zweiten Decklage 120 angeordnet ist. In Schritt 220 erfolgt das Befüllen von Hohlräumen 132 der Kernschicht 130 mit einer Kernfüllmasse 135. Sodann folgt in Schritt 230 das Anfertigen einer Fuge 140 von einer ersten Kante 105 der Sandwichplatte 100 zu einer gegenüberliegenden zweiten Kante 106 der Sandwichplatte 100 in einem Bereich der Sandwichplatte 100, in welchem die Hohlräume 132 der Kernschicht 130 mit Kernfüllmasse 135 befüllt sind, wobei beim Anfertigen der Fuge 140 über eine Breite und Länge der Fuge die erste Decklage 110 und die Kernschicht 130 abgetragen werden. In Schritt 240 erfolgt in einem Ausgangszustand der Sandwichplatte 100 das Befüllen der Fuge 140 mit einem Klebstoff 180. In Schritt 250 wird die Sandwichplatte 100 aus dem Ausgangszustand in einen gebogenen Zustand geformt. In dem letzten in Fig. 10 gezeigten Schritt 260 härtet der Klebstoff 180 in der Fuge 140 aus, während die Sandwichplatte in dem gebogenen Zustand gehalten wird.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Sandwichplatte
- 102: Biegungswinkel
- 104: Biegeradius
- 105: erste Kante
- 106: zweite Kante
- 110: erste Decklage
- 120: zweite Decklage
- 130: Kernschicht
- 131: Wabe
- 132: Hohlraum
- 133: Streifen
- 135: Kernfüllmasse
- 136: mit Kernfüllmasse gefüllte Hohlräume der Kernschicht
- 136A: Breite des verstärkten Bereichs
- 137: Breite/Weite
- 138: Länge
- 139: Höhe
- 140: Fuge
- 141: Längsrichtung der Fuge
- 142: Querrichtung der Fuge
- 143: Querfuge
- 144: erste Fugenwand
- 145: zweite Fugenwand
- 146: Fugenbreite
- 147: verbleibende Öffnung an der geknickten Fuge
- 148: Tiefenrichtung der Fuge
- 150: geradliniger Abschnitt der Fuge
- 160: konischer Abschnitt der Fuge
- 162: Öffnungswinkel der Fugenwände im konischen Abschnitt
- 164: Breite des konischen Abschnitts an der ersten Decklage
- 170: Verstärkungselement
- 180: Klebstoff

- W: Expansionsrichtung

- 200: Verfahren
- 210-260: Verfahrensschritte

## Patentansprüche

1. Sandwichplatte (100), aufweisend:
eine erste Decklage (110);
eine zweite Decklage (120);
eine Kernschicht (130);
wobei die Kernschicht (130) zwischen der ersten Decklage (110) und der zweiten Decklage (120) angeordnet und mit der ersten Decklage (110) und der zweiten Decklage (120) verbunden ist;
wobei eine Fuge (140) in der Sandwichplatte (100) angeordnet ist, um ein Umformen der Sandwichplatte (100) zu ermöglichen;
wobei sich die Fuge (140) von einer ersten Kante (105) zu einer zweiten Kante (106) der Sandwichplatte (100) erstreckt;
wobei sich die Fuge (140) in einer Tiefenrichtung (148), welche sich senkrecht zu der ersten Decklage (110) in Richtung der zweiten Decklage (120) erstreckt, durch die erste Decklage (110) und die Kernschicht (130) erstreckt, so dass die Sandwichplatte (100) entlang der Fuge (140) aus einem Ausgangszustand, in welchem die Sandwichplatte eben ist, in einen gebogenen Zustand so umgeformt werden kann, dass sich entlang einer Längsrichtung (141) der Fuge (140) eine Biegekante bildet.

2. Sandwichbauplatte (100) nach Anspruch 1,
wobei die Kernschicht (130) im Bereich der Fuge (140) vollständig abgetragen ist.

3. Sandwichplatte (100) nach Anspruch 1 oder 2,
wobei in dem gebogenen Zustand der Sandwichplatte (100) ein Klebstoff (180) in der Fuge (140) enthalten ist;
wobei der Klebstoff (180) die Fuge (140) in dem gebogenen Zustand bevorzugt vollständig ausfüllt.

4. Sandwichplatte (100) nach einem der voranstehenden Ansprüche,
wobei die Kernschicht (130) eine Mehrzahl von Hohlräumen (132) aufweist;
wobei die Hohlräume (132) in einem an die Fuge (140) angrenzenden Bereich (136) der Kernschicht (130) mit einer Kernfüllmasse (135) gefüllt sind.

5. Sandwichplatte (100) nach einem der voranstehenden Ansprüche,
wobei die Kernschicht (130) ein Wabenkern ist.

6. Sandwichplatte (100) nach einem der voranstehenden Ansprüche,
wobei die Fuge (140) mindestens eine sich in Querrichtung (142) der Fuge (140) erstreckende Querfuge (143) aufweist;
wobei ein Verstärkungselement (170) in der Querfuge (143) angeordnet ist.

7. Sandwichplatte (100) nach Anspruch 6,
wobei das Verstärkungselement (170) ein mehrschichtiges Material ist.

8. Sandwichplatte (100) nach einem der voranstehenden Ansprüche,
wobei die Fuge (140) durch eine erste Fugenwand (144) und eine der ersten Fugenwand (144) gegenüberliegende zweite Fugenwand (145) begrenzt wird.

9. Sandwichplatte (100) nach Anspruch 8,
wobei die Fuge (140) einen ersten Abschnitt (150) aufweist, in welchem die erste Fugenwand (144) in dem Ausgangszustand der Sandwichplatte (100) parallel zu der zweiten Fugenwand (145) verläuft.

10. Sandwichplatte (100) nach Anspruch 8 oder 9,
wobei die Fuge (140) einen zweiten Abschnitt (160) aufweist, in welchem die erste Fugenwand (144) schräg zu der zweiten Fugenwand (145) verläuft, so dass die Fuge (140) in dem zweiten Abschnitt (160) in dem Ausgangszustand der Sandwichplatte (100) eine konische Querschnittsform hat.

11. Verfahren (200) zum Herstellen einer gebogenen Sandwichplatte (100), das Verfahren (200) aufweisend die folgenden Schritte:
Herstellen (210) einer Sandwichplatte (100) mit einer ersten Decklage (110), einer zweiten Decklage (120) und einer Kernschicht (130), wobei die Kernschicht (130) zwischen der ersten Decklage (110) und der zweiten Decklage (120) angeordnet ist;
Befüllen (220) von Hohlräumen (132) der Kernschicht (130) mit einer Kernfüllmasse (135);
Anfertigen (230) einer Fuge (140) von einer ersten Kante (105) der Sandwichplatte (100) zu einer gegenüberliegenden zweiten Kante (106) der Sandwichplatte (100) in einem Bereich der Sandwichplatte (100), in welchem die Hohlräume (132) der Kernschicht (130) mit Kernfüllmasse (135) befüllt sind, wobei beim Anfertigen der Fuge (140) über eine Breite und Länge der Fuge die erste Decklage (110) und die Kernschicht (130) abgetragen werden;
in einem Ausgangszustand der Sandwichplatte (100), Befüllen (240) der Fuge (140) mit einem Klebstoff (180);
Umformen (250) der Sandwichplatte (100) aus dem Ausgangszustand in einen gebogenen Zustand;
Aushärten (260) des Klebstoffs (180) in der Fuge (140).

12. Verfahren nach Anspruch 11,
wobei beim Anfertigen der Fuge (140) die erste Decklage (110) und die Kernschicht (130) über die Breite und die Länge der Fuge vollständig abgetragen werden.

13. Verfahren nach Anspruch 11 oder 12,
wobei das Anfertigen der Fuge (140) das Anfertigen einer Querfuge (143) und das Einbringen eines Verstärkungselements (170) in die Querfuge (140) umfasst.

14. Verfahren nach einem der Ansprüche 11 bis 13,
wobei das Anfertigen der Fuge (140) das Anfertigen eines ersten Abschnitts (150) der Fuge (140) umfasst, wobei der erste Abschnitt (150) in dem Ausgangszustand der Sandwichplatte (100) zueinander parallel verlaufende gegenüberliegende Fugenwände (144, 145) hat.

15. Verfahren nach einem der Ansprüche 11 bis 14,
wobei das Anfertigen der Fuge (140) das Anfertigen eines zweiten Abschnitts (160) der Fuge (140) umfasst, wobei der zweite Abschnitt (160) in dem Ausgangszustand der Sandwichplatte (100) zueinander schräg verlaufende gegenüberliegende Fugenwände (144, 145) hat, so dass der zweite Abschnitt (160) in dem Ausgangszustand eine konische Querschnittsform hat, welche sich von der ersten Decklage (110) in Richtung der zweiten Decklage (120) verjüngt.
